(19) Europäisches Patentamt / European Patent Office / Office européen des brevets

(11) **EP 2 104 355 A1**

(12) **EUROPEAN PATENT APPLICATION**
published in accordance with Art. 153(4) EPC

(43) Date of publication:
**23.09.2009 Bulletin 2009/39**

(51) Int Cl.:
***H04N 7/26*** *(2006.01)*

(21) Application number: **07860507.8**

(22) Date of filing: **28.12.2007**

(86) International application number:
**PCT/JP2007/075304**

(87) International publication number:
**WO 2008/084745 (17.07.2008 Gazette 2008/29)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.01.2007 EP 07000368**

(71) Applicant: **Panasonic Corporation**
**Kadoma-shi**
**Osaka 571-8501 (JP)**

(72) Inventors:
• **WITTMANN, Steffen**
  **63225 Langen (DE)**
• **WEDI, Thomas**
  **63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **IMAGE CODING APPARATUS AND IMAGE DECODING APPARATUS**

(57)     The present invention provides an image coding apparatus and an image decoding apparatus capable of enhancing the image quality of decoded image data.

The image coding method according to the present invention is intended for coding an input image, and includes: coding the input image to generate a coded image; assigning each of areas in a picture included in the input image to a corresponding one of groups, and generating filter data for each of the groups; and outputting a coded stream including the coded image generated in the coding and the filter data generated in the generating.

FIG. 3

**Description**

**Technical Field**

The present invention relates to image coding apparatuses which code image data and image decoding apparatuses which decode image data, and in particular to a technique for adaptively applying filters on image data.

**Background Art**

Moving pictures have been adopted in increasing numbers of applications, ranging from video-telephoning and video-conferencing to digital television and digital versatile discs (DVDs). When a moving picture is transmitted or recorded in form of digital data, a substantial amount of data has to be transmitted through conventional transmission channels of limited available frequency bandwidth or has to be stored on storage media of limited capacity. Accordingly, in order to transmit and record digital data representing the moving picture, it is inevitable to compress the digital data to reduce the volume.

For this, many video coding standards have been developed. Such video coding standards are, for instance, ITU-T standards denoted with H.26x and ISO/IEC standards denoted with MPEG-x. The most advanced video coding standards are currently the standards denoted as H.264/AVC or MPEG-4/AVC.

The standards include the following steps:

- dividing a frame (picture) in a moving picture into blocks (macroblocks) in order to compress the data at a block level;
- reducing spatial redundancies within the frame by subjecting each of the divided blocks to a transform from spatial domain to frequency domain so as to generate transform coefficients;
- quantizing the transform coefficients (This video coding reduces the volume of data of the moving picture.); and
- entropy encoding the quantized transform coefficients.

The original transform coefficients cannot be recovered from the quantized transform coefficients due to a data loss introduced by the quantization. In other words, in the video coding, the image quality deteriorates due to quantization noise.

In addition, the standards make it possible to transmit only differences between frames utilizing temporal dependencies between blocks of the frames in order to further reduce the volume of data of the coded moving picture. This is embodied according to a motion estimation technique and a motion compensation technique.

Among the various video compression techniques, the above-described video compression technique (image coding method) is called hybrid coding technique and is known to be the most effective. The hybrid coding technique combines temporal and spatial compression techniques together with statistical coding technique, and includes motion-compensated differential pulse code modulation (DPCM), two-dimensional discrete cosine transform (DCT), quantization of DCT coefficients, and a variable length coding (VLC). The motion compensated DPCM includes: determining the movement of an image object between a current frame to be processed and a processed frame, and predicting the current frame according to the determined motion to produce the differences between the current frame and the prediction result.

In the coding and decoding of the image, several disturbances are caused in the image. For example, a quantization noise is caused when the DCT coefficients are quantized. Further, block distortions occur when the image is coded on a per block basis. In order to enhance the image quality of the decoded image data, the decoded image data is filtered. For example, block distortions are reduced by smoothing the pixels located at the boundaries of each block. It is also good to enhance the image quality of the current image by performing a linear filtering on the relating pixels located at the block boundaries.

However, such a filter only addresses to some particular pixels located at the boundaries of each block. In other words, it is impossible to filter the inner pixels of the block. For example, it is possible to perform filtering by employing a linear filter having predetermined filter coefficients. However, in the use of this filter, the content of the current image is not considered (in particular, there is no consideration of whether the image contains sharp edges or includes only a smooth area).

In order to further enhance the image quality, an adaptive filtering may be performed by analyzing the content of the images. For example, it is possible to further enhance the image quality of the current image by analyzing the content of the currently and/or previously coded image data and determining the filter parameters (filter coefficients) according to the content of the analyzed image data.

A conventional adaptive filter determines the filter parameters depending on disturbed image data of currently or previously decoded images. Although, a user may consider the filtered image data as a "better" image, there is still an unknown difference between a filtered image and the undisturbed "true" image.

Patent Reference 1 discloses adaptive filtering performed on video. The adaptive filtering in Patent Reference 1 is performed by: estimating a motion in a decoded image, detecting noise, calculating filter parameters according to the detection result, and applying a filter to the decoded image according to the filter parameters. Filter parameters are repeatedly calculated upon such detection.

Patent Reference 1: US Patent Application Publication No. 2005/0105627, Specification

**Disclosure of Invention**

**Problems that Invention is to Solve**

However, image quality enhancement by adaptive filtering is limited.

An increase in bit rate of a coded stream enhances the image quality. However, this requires a recording medium having a large capacity to store the coded stream and a communication medium having a wide bandwidth to transmit the coded stream.

The present invention has been made considering the above-described problem, and aims to provide an image coding apparatus and an image decoding apparatus capable of enhancing the image quality of decoded image data.

**Means to Solve the Problems**

In order to achieve the aim, the image coding method according to the present invention is intended for coding an input image, and includes: coding the input image to generate a coded image; assigning each of areas in a picture included in the input image to a corresponding one of groups, and generating filter data for each of the groups; and outputting a coded stream including the coded image generated in the coding and the filter data generated in the generating. In this way, each of the areas in the picture is assigned to the corresponding one of the groups, and filter data for each group is generated. This makes it possible to perform proper filtering on even the picture including areas each having a different property.

Here, the image coding method may further include decoding the coded image generated in the coding to generate a decoded image, wherein, in the generating, the filter data may be generated based on the input image and the decoded image corresponding to the input image. Since the filter data is determined using the undisturbed input image, it becomes possible to perform proper filtering.

In addition, the image coding method may further include decoding the coded image generated in the coding to generate a decoded image, wherein, in the generating, the filter data may be generated as cross-correlation data indicating a correlation between the input image and the decoded image corresponding to the input image. Since the cross-correlation data is determined using the undisturbed input image, it becomes possible to perform proper filtering.

In addition, in the assigning, each of the areas in the picture may be assigned to the corresponding one of the groups so that filtering is performed based on a unit different from a unit of coding. This makes it possible to perform filtering on a proper unit different from the unit of coding.

In addition, in the assigning, pixels each having a same property may be assigned to a corresponding one of the groups based on positions of the pixels in the picture. Since the pixels each having the same property is assigned to the same group in this way, it becomes possible to perform filtering based on the same filter data for the pixels having the same property.

In addition, in the assigning, the pixels may be assigned to the corresponding one of the groups according to the positions of the pixels in a block which is a unit of coding. This makes it possible to perform filtering based on the pixel positions in the block which is the unit of coding.

In addition, the assigning may be performed so that stronger filtering is performed on pixels located closer to boundaries of a block which is a unit of coding. Since stronger filtering is applied to the pixels located closer to the boundaries of the corresponding block which is the unit of coding, it becomes possible to perform filtering properly according to the distance from the boundaries of the corresponding block which is the unit of coding.

In addition, in the assigning, macroblocks each having a same property may be assigned to a corresponding one of the groups based on positions of the macroblocks in the picture. Since the macroblocks each having the same property is assigned to the same group and filter data is generated for each group, it becomes possible to perform filtering based on the same filter data on the macroblocks each having the same property.

In addition, the assigning may be performed so that a stronger filtering is performed on macroblocks each having a finer image pattern. Since the macroblocks each having a finer image pattern is subjected to stronger filtering, it becomes possible to perform filtering properly depending on the fineness of the image pattern.

In addition, in the assigning, each of the areas in the picture may be assigned to the corresponding one of the groups based on a predetermined assignment rule. Since this allows the image coding apparatus and the image decoding apparatus to omit exchange of the information indicating the assignment rule, it becomes possible to perform fast processing.

In addition, in the assigning, each of the areas in the picture may be assigned to the corresponding one of the groups based on an adaptive assignment rule. This makes it possible to select the optimum assignment rule according to the status.

In addition, in the outputting, information which indicates an assignment rule and is included in the coded stream may be outputted. This allows the image decoding apparatus side to employ the assignment rule determined by the image coding apparatus side.

In addition, in the outputting, the filter data may be inserted in a supplemental enhancement information area included in the coded stream. This makes it possible to insert the filter data into the coded stream in a simple manner.

In order to achieve the aim, the image decoding apparatus according to the present invention is intended for decoding a coded image, and includes a decoding unit configured to decode the coded image included in a coded stream to generate a decoded image; a filter data extraction unit configured to extract, from the coded stream, filter data for each of the groups assigned to areas in a picture; and a filtering unit configured to perform filtering on the decoded image generated by the decoding unit, based on the filter data extracted by the filter data extraction unit. Since filter data is extracted for each of the groups assigned to the respective areas in the picture in this way, it becomes possible to perform filtering properly even on the picture including areas each having a different property.

In addition, the image decoding apparatus may further include a filter coefficient determination unit configured to determine filter coefficients based on the filter data extracted by the filter data extraction unit, wherein the filtering unit may be configured to perform filtering on the decoded image generated by the decoding unit, based on the filter coefficients determined by the filter coefficient determination unit. Since the filter coefficients are determined based on the filter data in this way, it becomes possible to perform filtering more properly.

In addition, the filter data extraction unit may be configured to extract, as the filter data, cross-correlation data indicating a cross-correlation between the decoded image and an uncoded image corresponding to the decoded image, and the filter coefficient determination unit may be configured to calculate auto-correlation data indicating a correlation within the decoded image, and determine the filter coefficients based on the auto-correlation data and the cross-correlation data. Since the filter coefficients are determined using the auto-correlation data and the cross-correlation data, it becomes possible to perform filtering more properly.

In addition, the filtering unit may be configured to perform filtering on pixels each having a same property using same filter data, based on positions of the respective pixels in the picture. This makes it possible to filter the pixels each having the same property, based on the same filter data.

In addition, the filtering unit may be configured to perform filtering according to positions of the pixels in a block which is a unit of coding. This makes it possible to perform filtering based on the pixel positions in the block which is the unit of coding.

In addition, the filtering unit may be configured to perform filtering so that a stronger filtering is performed on pixels located closer to a boundary of a block which is a unit of coding. Since stronger filtering is applied to the pixels located closer to the boundaries of the corresponding block which is the unit of coding, it becomes possible to perform filtering properly according to the distance from the boundaries of the corresponding block which is the unit of coding.

In addition, the filtering unit may be configured to perform filtering on macroblocks each having a same property using same filter data, based on positions of the respective macroblocks in the picture. This makes it possible to filter the macroblocks each having the same property, based on the same filter data.

In addition, the filtering unit may be configured to perform filtering so that a stronger filtering is performed on macroblocks each having a finer image pattern. Since the macroblocks each having a finer image pattern is subjected to stronger filtering, it becomes possible to perform filtering properly depending on the fineness of the image pattern.

In addition, the filtering unit may be configured to perform filtering on the decoded image generated by the decoding unit according to a predetermined assignment rule. Since this allows the image coding apparatus and the image decoding apparatus to omit exchange of the information indicating the assignment rule, it becomes possible to perform fast processing.

In addition, the filtering unit may be configured to perform filtering on the decoded image generated by the decoding unit according to an adaptive assignment rule. This makes it possible to select the optimum assignment rule according to the status.

In addition, the filter data extraction unit may be configured to extract information indicating an assignment rule from the coded stream. This allows the image decoding apparatus side to employ the assignment rule determined by the image coding apparatus side.

In addition, the filter data extraction unit may be configured to extract the filter data from supplemental enhancement information included in the coded stream. This makes it possible to extract the filter data from the coded stream in a simple manner.

The present invention can be implemented not only as an image coding method like this, but also as an image coding apparatus and an integrated circuit having units corresponding to the unique steps of the image coding method, and as a program causing a computer to execute these steps. As a matter of course, such program can be distributed through recording media such as CD-ROMs and communication media such as the Internet.

The present invention can be implemented not only as an image decoding apparatus like this, but also as an integrated circuit, as an image decoding method having steps corresponding to the unique units provided to the image decoding apparatus, and as a program causing a computer to execute these steps. As a matter of course, such program can be distributed through recording media such as CD-ROMs and communication media such as the Internet.

**Effects of the Invention**

As described above, according to the present invention, each of areas in a picture is assigned to a corresponding one of groups so as to generate filter data for each of the groups, and thus it is possible to perform proper filtering even on a picture including areas each having a different property.

**Brief Description of Drawings**

[FIG. 1] FIG. 1 is a schematic block diagram of a conventional image coding apparatus.
[FIG. 2] FIG. 2 is a schematic block diagram of a conventional image decoding apparatus.
[FIG. 3] FIG. 3 is a diagram schematically indicating a filtering method.
[FIG. 4] FIG. 4 is a diagram schematically indicating a filtering method.
[FIG. 5] FIG. 5 is a schematic block diagram of an image coding apparatus according to the present invention.
[FIG. 6] FIG. 6 is a schematic block diagram of the image coding apparatus according to the present invention.
[FIG. 7] FIG. 7 is a schematic block diagram of an image decoding apparatus according to the present invention.
[FIG. 8] FIG. 8 is a schematic block diagram of an image coding apparatus according to the present invention.
[FIG. 9] FIG. 9 is a schematic block diagram of an image decoding apparatus according to the present invention.
[FIG. 10] FIG. 10 is a schematic block diagram of an image coding apparatus according to the present invention.
[FIG. 11] FIG. 11 is a diagram showing the structure of a coded stream.
[FIG. 12] FIG. 12 is a diagram showing an exemplary SEI syntax.
[FIG. 13] FIG. 13 is a diagram showing an exemplary SEI syntax of cross-correlation data.
[FIG. 14] FIG. 14 is a flowchart indicating operations of one of the image coding apparatuses according to the present invention.
[FIG. 15] FIG. 15 is a flowchart indicating operations of one of the image decoding apparatuses according to the present invention.

**Numerical References**

300 Image coding apparatus
320 Transform and quantization unit
340 Filter data generation unit
390 Entropy coding unit
400 Image decoding apparatus
410 Entropy decoding unit
420 Inverse quantization and inverse transform unit
430 Filter coefficient determination unit
440 Adaptive filter

**Best Mode for Carrying Out the Invention**

The present invention relates to a technique for performing adaptive filtering on disturbed image data, specifically to a technique for performing adaptive filtering on image data disturbed in a coding process and the subsequent decoding process. Modern image recording and/or transmitting systems aim to reduce the data volume by compressing the image data. For this purpose, an image coding apparatus compresses the image data before recording or transmission, and an image decoding apparatus decompresses the compressed data for a reproduction. Although it is possible to implement the present invention in image coding apparatuses which employ a hybrid coding technique, the application targets of the present invention are not limited to image coding apparatuses which employ image prediction. In addition, the present invention is also applicable to any other image coding apparatuses.

First, a description is given of a general hybrid coding technique.

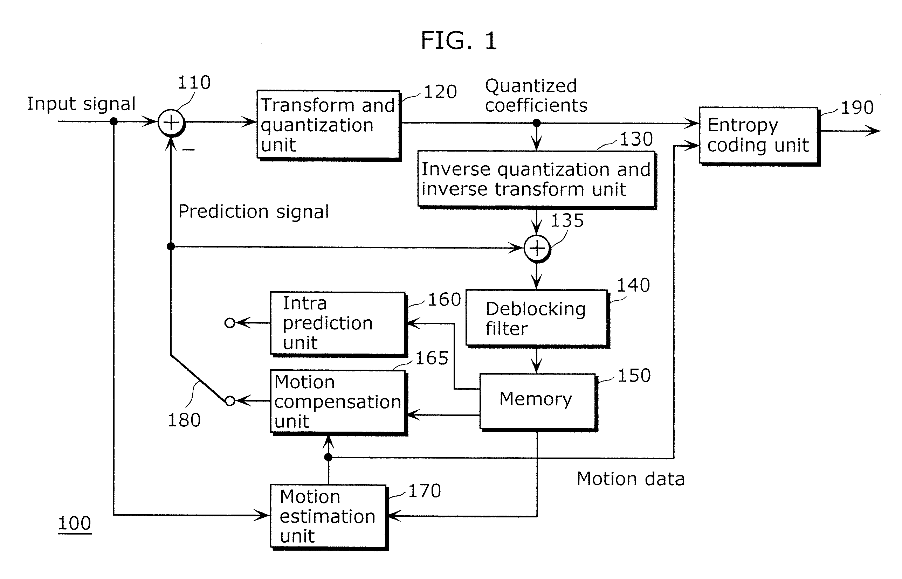

FIG. 1 is a schematic block diagram of a conventional image coding apparatus 100.

The image coding apparatus 100 is an apparatus which employs a hybrid coding technique, and includes a subtracter 110, a transform and quantization unit 120, an inverse quantization and inverse transform unit 130, an adder 135, a deblocking filter 140, a memory 150, an intra prediction unit 160, a motion compensation unit 165, a motion estimation unit 170, a switch 180, and an entropy coding unit 190. The subtracter 110 calculates a difference (prediction error) between a current image to be processed (an input signal) and a prediction signal of the current image. The prediction signal of the current image is generated based on an image coded previously. The transform and quantization unit 120 transforms the prediction error from the spatial domain to the frequency domain, quantizes the resulting transform coefficients, and outputs the quantized coefficients. The entropy coding unit 190 entropy codes the quantized coefficients.

The image coding apparatus 100 employs a differential pulse code modulation (DPCM) approach for transmitting only differences with the subsequent images in an inputted video sequence. The subtracter 110 which receives the current moving picture to be coded calculates these differences in order to subtract a prediction image of the current image from the moving picture to be coded.

The image coding apparatus 100 performs such prediction based on the result of previously decoding a coded image ("locally decoded image"). For this reason, the decoding unit embedded in the image coding apparatus 100 performs the coding steps in reverse manner. More specifically, the inverse quantization and inverse transform unit 130 de-quantizes the quantized coefficients to obtain de-quantized coefficients, and inversely transforms the resulting de-quantized coefficients. The adder 135 adds the obtained decoded differences to the prediction signal.

The motion compensated DPCM, performed by the image coding apparatus 100, predicts a current field or frame from a corresponding previous field or frame. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of the current frame is estimated. This processing is performed by the motion estimation unit 170 which receives the current input signal and the locally decoded images.

The motion compensation unit 165 performs motion compensation based on the motion estimation result. Motion compensation is an estimation in which determined motion vectors are utilized. The information contained in a prediction error block, representing the differences between the current and the predicted block, is then transformed into the transform coefficients by the transform and quantization unit 120. In general, a two-dimensional discrete cosine transform (DCT) is employed for this transform.

In accordance with the H.264 / AVC standard, the input image is divided into macroblocks. The macroblocks are coded applying an "intra" or "inter" coding mode. In the inter mode, a macroblock is predicted by employing the above-described motion compensation. In the intra mode, the prediction signal is set to zero, but H.264/AVC additionally employs a prediction scheme based on coded macroblocks of the same image in order to predict subsequent macroblocks.

Only intra-coded images (I-pictures) can be coded without reference to any previously decoded image. The I-pictures provide error resilience for the encoded video sequence. The I-pictures enable random accesses, more specifically, enable accesses to the I-pictures in a coded video sequence. In other words, the I-pictures become entry points into bit streams of coded data. The intra-inter switch 180 controls a switch between the intra mode which is a processing by the intra prediction unit 160 and the inter mode which is a processing by the motion compensation unit 165.

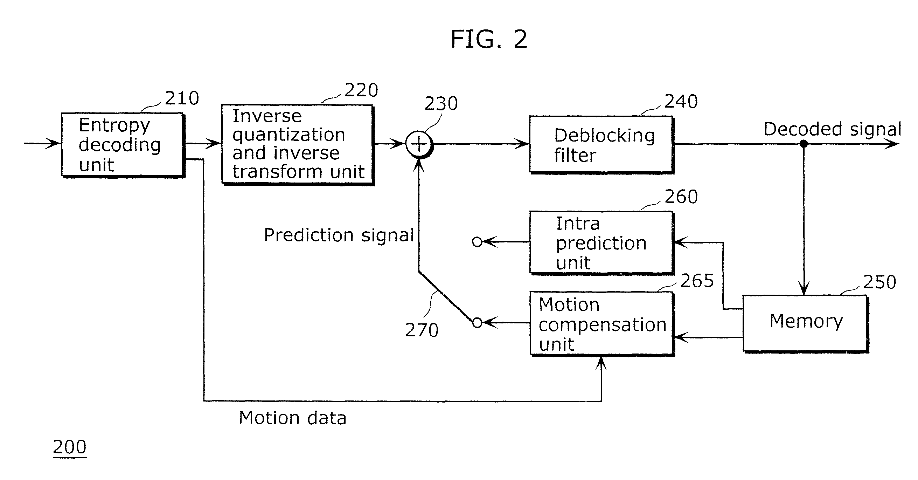

FIG. 2 is a schematic block diagram of a conventional image coding apparatus 200.

The image decoding apparatus 200 is an apparatus which employs a hybrid coding technique, and includes an entropy decoding unit 210, an inverse quantization and inverse transform unit 220, an adder 230, a deblocking filter 240, a memory 250, an intra prediction unit 260, a motion compensation unit 265, and a switch 270. At the image decoding apparatus 200 side, coding processes are performed in reverse manner in order to reconstruct coded images.

First, the entropy decoding unit 210 performs entropy coding in reverse manner to obtain quantized coefficients and motion data. The quantized coefficients are inputted to the inverse quantization and inverse transform unit 220, and the motion data are inputted to the motion compensation unit 265. The inverse quantization and inverse transform unit 220 de-quantizes the quantized coefficients to transform the quantized coefficients into frequency components, and inversely transforms the frequency components into prediction errors. In an intra mode, the adder 230 generates decoded images by adding prediction images outputted from the intra prediction unit 260 to the prediction errors outputted from the inverse quantization and inverse transform unit 220. In an inter mode, the adder 230 generates decoded images by adding prediction images outputted from the motion compensation unit 265 to the prediction errors outputted from the inverse quantization and inverse transform unit 220. The generated decoded images may be filtered by the deblocking filter 240. In addition, the decoded images are stored in the memory 250 so as to be used by the intra prediction unit 260 and the motion compensation unit 265.

The deblocking filters 140 and 240 remove block distortions by smoothing the block boundaries, but neither remove other noises nor enhance the image quality of the areas other than the block boundaries. In addition, the deblocking filters 140 and 240 cannot perform adaptive filtering depending on decoded images irrespective of decoded image details (sharpness, smoothness, and the like) because the deblocking filters 140 and 240 apply linear filtering using predetermined filter coefficients.

In order to further enhance the image quality of the decoded image data, an additional filter may be applied to decoded image data. For example, the de-blocking filter is either substituted by another filter, or an additional filter is employed after the de-blocking filter.

However, when always using the same filter coefficients to filter the decoded image data, the enhancement of the image quality varies depending on the content of the images. Accordingly, in order to further enhance the image quality, the coefficients of the filter may be determined according to the current image data. A conventional filter uses, for the whole image, a single set of filter coefficients determined without any consideration of spatial dependencies in the image.

Conventionally, when performing an adaptive filtering, the disturbed image data is analyzed, and different filter coefficients are determined depending on the analyzed properties of the image. For example, the image may be either sharpened or smoothed, depending on the content of the current image data. In a conventional image decoding apparatus, the analysis to determine the adaptive filter coefficients is made based on the disturbed image data. Since this image data includes errors such as quantization noise, it is impossible to determine an optimum set of filter coefficients based on the image data.

On the other hand, an analysis of undisturbed image data enables determination of data lost in the coding of the image data and the subsequent decoding. For this, in the present invention, the undisturbed image data is analyzed in advance at the image coding apparatus side, and the analysis result is proved to the image decoding apparatus. This allows the image decoding apparatus to determine sets of filter coefficients based on the provided analysis result, and perform adaptive filtering on the decoded image data according to the sets of filter coefficients determined in this manner.

A single image may have different properties on different spatial positions. For example, the single image may include an area with a lot of sharp edges and, at the same time, a smooth and flat area. In this case, different filter coefficients are required for the respective areas within the image in order to obtain an optimal result for each of the areas. In other words, when using only a single set of filter coefficients for a single complete image, the filter coefficients can be optimized only for the areas of one type within the image, or an average set of filter coefficients has to be used for filtering the whole image.

In addition, when coding an image and successfully decoding the coded image, the image is usually divided into plural image areas (for example, macroblocks). Accordingly, when the individual image areas are put together, the pixels at the boundaries between the individual areas have to be filtered in order to avoid block distortions. However, such filtering is only required at the boundaries of the individual image areas. In contrast, in the middle of an image area, it is preferable that another kind of filtering is applied in order to emphasize sharp edges and enhance the image quality.

In the present invention, each of the areas within a picture is assigned to a corresponding one of groups of pixels, and filter data is generated for each of the groups. The present invention is further characterized by determining filter coefficients for each of the groups, and applying the same filtering operation to the filter coefficients. This feature is described in detail below with reference to the drawings.

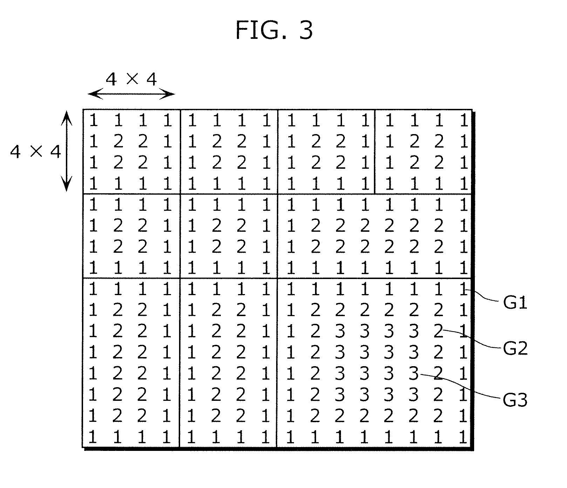

FIG. 3 is a diagram schematically showing a method for performing different filtering for each pixel position.

Here, each of the pixels in a picture is assigned to a corresponding one of three groups G1 to G3. Pixels each having the same property is assigned to a group, and the pixels in the same group is subjected to the same filtering operation. The number of groups is not limited. Hereinafter, assignment of each pixel into a corresponding one of the groups is also referred to as "a pixel is assigned to a group" or "a pixel is classified into a group".

Rules for assigning a pixel to a group are not specifically limited. For example, it is possible to assign a pixel to a group based on a predetermined rule. It is also good to prepare a predetermined rule in form of a map indicating the assignment of the respective pixels to corresponding groups. In the case where the same assignment is always used for each image, the same map can be pre-stored in the image coding apparatus and the image decoding apparatus. This enables a quick and easy assignment of the respective pixels without transmitting any additional data from the image coding apparatus to the image decoding apparatus.

Alternatively, it is also possible to pre-store plural different maps indicating the assignment of the respective pixels to the corresponding groups in the image coding apparatus and the image decoding apparatus. In this case, the image coding apparatus has only to select an optimal map for current image data and shows the selected map for the image decoding apparatus. Accordingly, only a small amount of additional data has to be transmitted from the image coding apparatus to the image decoding apparatus.

Alternatively, the assignment of the respective pixels to the corresponding groups G1, G2 and G3 may be determined based on the spatial distance to the corresponding boundaries (described later). In FIG. 3, such boundaries are shown by solid lines. All pixels at boundaries are assigned to the group G1, Pixels having a spatial distance of one pixel to the corresponding boundaries are assigned to the group G2, and the remaining pixels are assigned to the group G3.

Here, a set of boundaries encloses a unit of image coding (or a unit of frequency transform). In other words, in the case where the image is coded on a per macroblock basis, the assignment of the respective pixels to the corresponding groups can be determined based on the spatial distances of the respective pixels to the corresponding boundaries of the macroblock. As a result, filtering is to be performed using a unit different from the unit of coding.

If a pixel assignment rule is known in the image decoding apparatus side, the image decoding apparatus can apply the same assignment rule as in the image coding apparatus side. For this, it is not necessary that the image coding apparatus transmits any additional assignment data to the image decoding apparatus.

The image decoding apparatus may perform adaptive assignment of the respective pixels depending on the properties of the image or pixels. In other words, analysis of the current image data enables classification into pixel groups each having a similar property. Accordingly, the image coding apparatus may detect an area with sharp edges and an area having only a flat image content, and classify the respective pixels into groups depending on the detected patterns. Alternatively, the image coding apparatus may classify the respective pixels into groups depending on the color, the luminance and/or chrominance values, or any other features detected in the image.

Rules for assigning the respective pixels into corresponding groups may be determined for each image. Switching pixel assignment rules for each image makes it possible to achieve a very precise assignment. Alternatively, it is also possible to assign the respective pixels in successive images to a predetermined single group by maintaining the same assignment rule. For example, an assignment rule is determined only once for an image sequence which continues for a particular number of successive images, for instance, a complete group of pictures (GOP). In this case, it is also possible to maintain the same assignment rule until a scene change is detected, or for a period of successive images belonging to the same GOP.

FIG. 3 illustrates a case where filtering is performed for each of pixels having the same property, but the present invention is not limited to this. Hereinafter, a description is given of a case where filtering is performed for each of macroblocks each having the same property.

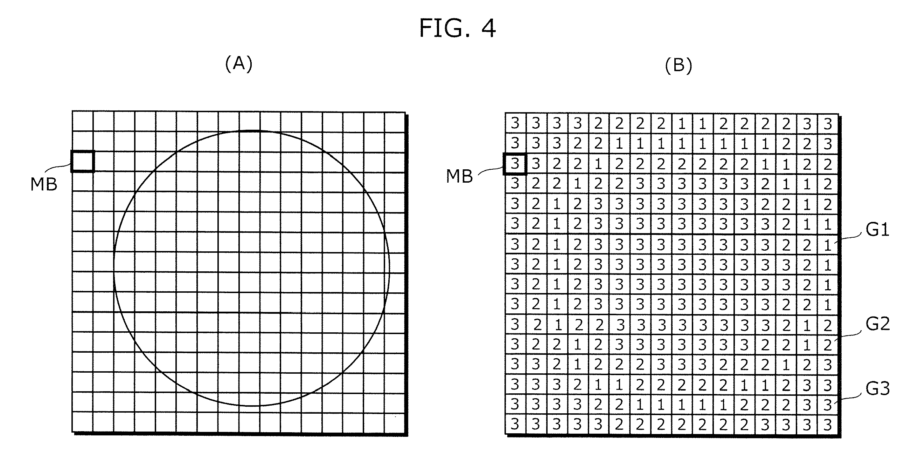

FIG. 4 is a diagram schematically indicating a method for performing different filtering for each macroblock position. More specifically, FIG. 4(A) shows a picture on which a circle is drawn, and FIG. 4(B) shows a state where each of the macroblocks in the picture is assigned to a corresponding one of the groups G1 to G3. As a matter of course, this diagram is a conceptual diagram. For example, the number of macroblocks in the picture is not limited to the number shown in this diagram.

Here, the macroblock groups located at the circle are assigned to the group G1, the macroblock groups adjacent to the group G1 are assigned to the group G2, and the remaining macroblock groups are assigned to the group G3. This grouping makes it possible to perform filtering according to image patterns by increasing the filter strength in the ascending order of group G1 to G3.

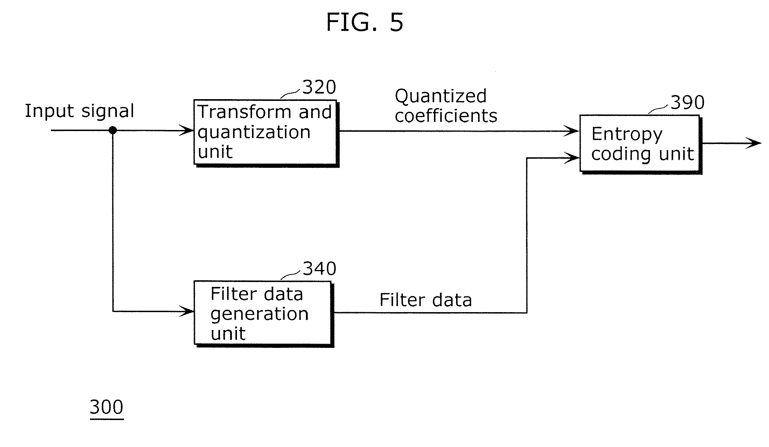

FIG. 5 is a schematic block diagram of an image coding apparatus 300 according to the present invention.

The image coding apparatus 300 includes a transform and quantization unit 320, a filter data generation unit 340, and an entropy coding unit 390. When receiving a current image data (input image), the transform and quantization unit 320 performs discrete cosine transform (DCT) and quantization of DCT coefficients. The filter data generation unit 340 analyzes the current image data, assigns each of the pixels in the image to a corresponding one of the groups, generates filter data for each of the groups, and provides the filter data to the entropy coding unit 390. The filter data is additional data used to determine adaptive filter coefficients. The entropy coding unit 390 combines the coded image data and the corresponding filter data in a single bit stream, and outputs it as a coded stream. As a result, the filter data is to be transmitted or recorded together with the coded image data.

Filter data may be implemented in various forms, and are not specifically limited.

For example, filter data may relate to the contrast, brightness, or color characteristics of the pixels belonging to each group. In the case where an input image is coded for each color component such as red (R), green (G) and blue (B), or Luminance (Y) and chrominance (Cr, Cb), filter data may be generated for each color component. This makes it possible to perform proper filtering for each color component.

In addition, it is possible to calculate a characteristic ratio between the high frequency components and low frequency components of the image data, and to analyze statistical characteristics such as the standard deviation of the pixel values. In this case, the filter data may be information indicating whether the pixels in the current group includes a sharp edge or the pixels relates to a flat image data. In addition, it is also possible to analyze motion in the current group. In this case, the filter data may describe the degree or the times of appearance of change in the image data, or the time points of occurrence of scene change. In addition, it is also possible to analyze the image data and determine the patterns and properties of the image data. In this case, the filter data may be information indicating the properties of the image data, or parameters indicating the properties of the image data. In this way, filter data may be any information as long as the information enables setting of adaptive filters.

In the adaptive determination of filter data for the pixels belonging to each group, different approaches are possible. In other words, new filter data set may be determined for each group in the image. For example, new filter data can be determined for each group in a new image each time of coding of the image. In addition, it is also good to calculate a single filter data set for plural images. For example, each filter data set may be effective for consecutive image sequences such as a picture group (GOP) and a complete scene. When predictively encoding the image data, it may be also possible to determine separate filter data depending on the coding mode (for I, P, or B-picture). In other words, any other rule may be employed as long as the rule is for combining plural images having the same filter data.

Otherwise, an image may be divided into separate image areas. For example, a single picture may be divided into plural blocks or macroblocks. In this case, it is also possible to determine a separate set of filter data for each image area. In addition, plural image areas may be grouped together and a single set of filter data is determined for the image area for each group. For example, all blocks belonging to the same slice of an image can be combined into a group, and a common set of filter data is determined for the group.

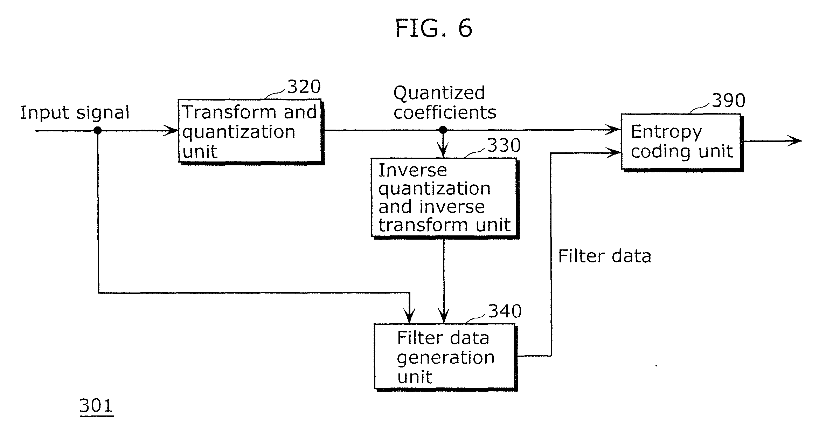

FIG. 6 is a schematic block diagram of an image coding apparatus according to the present invention.

The image coding apparatus 301 is capable of generating filter data based on an undisturbed input image and the decoded image corresponding to the input image, in addition to generating filter data based on the undisturbed input image (input signal) only. More specifically, the image coding apparatus 301 includes an inverse quantization and inverse transform unit 330 which functions as a decoding unit. The inverse quantization and inverse transform unit 330 performs inverse quantization and inverse cosine transform on the coded image data. The filter data generation unit 340 calculates the cross-correlation data indicating the cross-correlation between the undisturbed image data and the corresponding decoded image data by comparison of both the data. This cross-correlation data may be any information as long as the information relates to the differences between the undisturbed image data and the disturbed image data.

In the case where the image decoding apparatus does not pre-store information indicating assignment rules (for example, the information indicating assignment rules of assigning the respective pixels in a picture to the corresponding groups G1, G2, and G3), the image coding apparatus has to provide the current assignment rules to the image decoding apparatus by, for example, adding the information indicating the assignment rules to the coded image data. Information indicating assignment rules may be implemented in various specific forms, and are not specifically limited. For example, the information indicating the assignment rules may be information indicating that a pre-stored assignment map has been selected, or may be information indicating that a predetermined rule has been selected in order to assign a particular pixel to a predetermined group.

The image coding apparatus may generate a map indicating pixel assignment to groups. This map may indicate that the respective pixels in an image are assigned to predetermined groups, or may indicate only pixel assignment to image areas such as blocks. This map may be added to coded image data and transmitted to the image decoding apparatus. This allows the image decoding apparatus which receives the map to perform the same pixel assignment as in the image coding apparatus.

A single bitstream is generated in order to provide the image decoding apparatus with filter data and/or information indicating assignment rules (hereinafter, they are also referred to as "additional data" as a whole) in addition to the coded image data.For example, the additional data is inserted into the header of the coded image data sequence, and provided to the image decoding apparatus.

The additional data may be provided to the image decoding apparatus separately from the coded image data. For example, in the case of dividing the coded image data into packets and transmits the packets, the additional data may be inserted in-between the packets of the coded image data. The coded image data packets are in conformity with the conventional data formats. Accordingly, the image decoding apparatus can decode the image data even though the image decoding apparatus cannot handle the additional data. In this case, the image decoding apparatus discards the additional data inserted in-between the image data, and performs a conventional decoding on the image data. The additional information may be transmitted in a SEI which is supplemental enhancement information in H.264/AVC. This point is described later in detail.

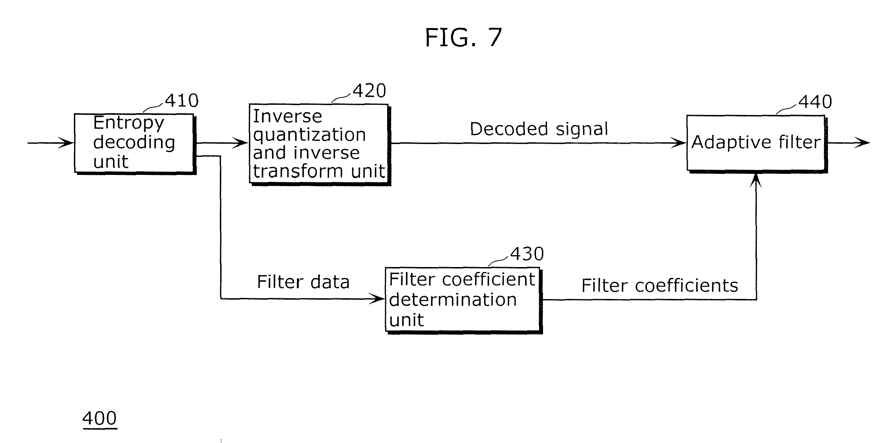

FIG. 7 is a schematic block diagram of an image decoding apparatus according to the present invention.

The image decoding apparatus 400 includes an entropy decoding unit 410, an inverse quantization and inverse transform unit 420, a filter coefficient determination unit 430, and an adaptive filter 440. The entropy decoding unit 410 extracts the filter data from the coded image data, and provides the extracted filter data to the filter coefficient determination unit 430. The respective pixels of the current image are assigned to a corresponding one of the groups. The rule applied in this assignment is either a known assignment rule or an adaptive assignment rule included in the coded image data. The filter coefficient determination unit 430 determines the filter coefficients for each group based on the extracted filter data, and provides the determined filter coefficients to the adaptive filter 440. In this way, the adaptive filter 440 filters the decoded image data of each group based on the provided filter coefficients.

The filter coefficients for all the groups may be determined at the image coding apparatus side, and inserted in the coded image data. This requires only one-time calculation of filter coefficients at the image coding apparatus side, and thus the image decoding apparatus side is not required to calculate filter coefficients separately. This simplifies filter setting.

Alternatively, it is also good that only basic information to determine filter coefficients is inserted into image data as filter data, and the image decoding apparatus determines a set of filter coefficients separately based on the filter data. This makes it possible to consider the individual computational resources of the image decoding apparatus. For example, in the case where the image decoding apparatus is a mobile terminal, the mobile terminal may have only a slow processor and a small display panel. In this case, the mobile terminal can perform filtering operation using a small number of filter coefficients. On the other hand, in the case where a high-end image decoding apparatus which outputs image data on a large display may include a fast and powerful filter processor. In this case, the image decoding apparatus can determine a greater number of filter coefficients and apply a more complex filter operation. An image decoding apparatus may perform a different filter operation. It is preferable that an image decoding apparatus may provide: a power-saving mode where only a small number of filter coefficients is determined; and a high-quality mode where a greater number of filter coefficients is determined.

Various methods for determining filter coefficients can be performed by image decoding apparatuses, and there is no specific limitation. For example, it is also good that the image decoding apparatus pre-stores plural sets of filter coefficients, and selects a set of filter coefficients according to filter data from among the pre-stored sets of filter coefficients. For example, a set of filter coefficients selected when filter data indicates that the image is a flat image is a set of filter coefficients to smooth the decoded image data. On the other hand, a set of filter coefficients selected when filter data indicates that the image includes fine details is a set of filter coefficients to sharpen the edges in the image.

Various standards for selecting filter coefficients can be employed, and there is no specific limitation. For example, it is also possible to select filter coefficients depending on motion in an image, the statistical characteristics, the ratio between high frequency components and low frequency components, or any other standards. Otherwise, it is also possible to select filter coefficients depending on the genre of the current image sequence. For example, different filter coefficients may be selected for each of a sports program, news, documentary, and a music clip. Alternatively, it is also possible to select different filter coefficients based on the ratio between high frequency components and low frequency components, the contrast, the brightness, and the statistical characteristics of the current image.

As described earlier, the image coding apparatus is capable of generating filter data by comparing undisturbed image data and the corresponding decoded image data. In this case, the image decoding apparatus can determine filter coefficients which minimize the difference between the undisturbed image data and the corresponding decoded image data. In other words, the filter data may give a hint how to minimize the difference between the decoded image data and undisturbed image data. More specifically, in the case where cross-correlation data indicating the cross-correlation between the undisturbed image data and the corresponding decoded image data is calculated by the image coding apparatus side, the cross-correlation data can be used as a basis for calculating the filter coefficients at the image decoding apparatus side.

For example, in the case where the cross-correlation data is transmitted as filter data, the image decoding apparatus can execute an adaptive Wiener filtering based on the cross-correlation data. Here, the cross-correlation data is used as the filter data, but any other information may be filter data as long as the information indicates the difference between the undisturbed imaged data and the disturbed imaged data. Additionally, a Wiener filter is given as an example, but any other filter can be employed as long as the filter can be used for filtering of decoded image data.

The Wiener filter is described in detail below.

The filter parameter w in the Wiener filter is shown as Math 1 where an auto-correlation matrix R and a cross-correlation vector (cross-correlation data) p are used. When the auto-correlation matrix R is a matrix composed of M x M elements (M denotes a natural number) and the cross-correlation vector p is a vector composed of M x 1 elements, the filter parameter w is shown as a matrix composed of M filter coefficients. In addition, R -1 is an inverse matrix of the auto-correlation matrix R.

[Math 1]

$$w = R^{-1} \times p$$

The filter parameter w of the Wiener filter is intended to perform filtering by performing convolution processing on the image to be filtered. For example, as shown in Math 2, a two-dimensional 3 x 3 tap filter includes nine filter coefficients.

[Math 2]

$$W = \begin{pmatrix} W_{11} & W_{12} & W_{13} \\ W_{21} & W_{22} & W_{23} \\ W_{31} & W_{32} & W_{33} \end{pmatrix}$$

In the case of calculating filter parameter w composed of 3 x 3 filter coefficients as shown in Math 2, the auto-correlation matrix R is composed of 9 x 9 elements as shown in Math 3.

[Math 3]

$$R = \begin{pmatrix} R_{11} & \cdots & R_{19} \\ \vdots & \ddots & \vdots \\ R_{91} & \cdots & R_{99} \end{pmatrix}$$

In the case of calculating filter parameter w composed of 3 x 3 filter coefficients as shown in Math 2, the auto-correlation vector p is composed of 9 x 1 elements as shown in Math 4.

[Math 4]

$$p = \begin{pmatrix} p_1 \\ \vdots \\ p_9 \end{pmatrix}$$

The cross-correlation vector p is estimated based on the input image and a locally decoded image Rc, and the auto-correlation matrix R is estimated based on the locally decoded image Rc only. The operation of the matrix shown as Math 1 yields, for example, a filter parameter w composed of 3 x 3 elements shown in Math 5.

[Math 5]

$$w_{3 \times 3} = \begin{pmatrix} -0.03495 & 0.05748 & -0.02351 \\ 0.05896 & 0.88896 & 0.05978 \\ -0.02719 & 0.06011 & -0.03945 \end{pmatrix}$$

For example, when performing filtering using the filter parameter w obtained for the image, an operation of the matrix shown as Math 6 is performed. More specifically, the generated matrix is composed of the pixel value (229) of the pixel to be filtered in the image and the pixel values (192, 225, 225, and the like) of pixels located around the pixel. The subsequent operation calculates the product of the matrix composed of plural pixel values and the above-described filter parameter w. As a result of the filtering operation (matrix operation), the pixel value of the pixel (229) is 227. 47.

[Math 6]

$$S_f = \begin{pmatrix} 192 & 225 & 255 \\ 146 & 229 & 255 \\ 132 & 198 & 252 \end{pmatrix} \cdot w = 227.47$$

The pixel value 227. 47 indicating the result of filtering operation is truncated to 227 through truncation after decimal point.

The image decoding apparatus which has obtained the coded stream can extract the cross-correlation data (cross-correlation vector) p from the coded stream, and use the above-described Wiener filter based on the extracted cross-correlation data p. In other words, the image decoding apparatus generates a decoded image by decoding the coded stream and generates the auto-correlation matrix R from the decoded image. In this way, as shown in Math 1, the filter parameter w of the Wiener filter can be calculated using the auto-correlation matrix R and the cross-correlation vector p.

As a result, as shown in Math 6, the image decoding apparatus performs a filtering operation on each of the pixels in the decoded image using the filter parameter w. This makes it possible to remove block distortion and noise such as quantization noise which would be included in the obtainable decoded image, and thus achieve the decoded image having approximately the same image quality as that of the input image.

In other words, when the input image is coded and subsequently decoded, block distortion, quantization noise, and the like occur in the decoded image in the coding and decoding processes. Thus, the image quality of the decoded image is worse than that of the input image. The Wiener filter is designed to minimize the difference (the root mean square of the difference between pixel values) between the input image and the image obtained by applying the filter to the corresponding decoded image. Accordingly, application of the Wiener filter to the decoded image successfully renders the decoded image similar to the original input image.

In the above-described example, the number of filter coefficients (tap number) which compose the filter parameter w is the value obtained by 3 x 3. However, the number of filter coefficients may be any, for example, the value obtained by 7 x 7. The filter parameter w is a two-dimensional matrix, but a one-dimensional matrix is possible. Here, the greater the number of filter coefficients becomes, the higher the filtering accuracy becomes.

In the above-described examples, the adaptive filter is employed as an additional post-processing filter. The adaptive filtering is applied to all decoded image data or to particular images only. For example, the filter data may also include information indicating whether or not an adaptive filtering should be applied to the current image data. In a system providing plural coding modes, it is also possible to apply a different filtering depending on the current coding mode.

For example, the present invention may be applied to a system for coding and decoding a prediction image. In this case, it is good to filter intra-coded images only. In addition, it is also good to generate filter data different between the intra-coded data and the inter-coded data. Hereinafter, a detailed description is given of a case of applying the present invention to a system for coding and decoding a prediction image.

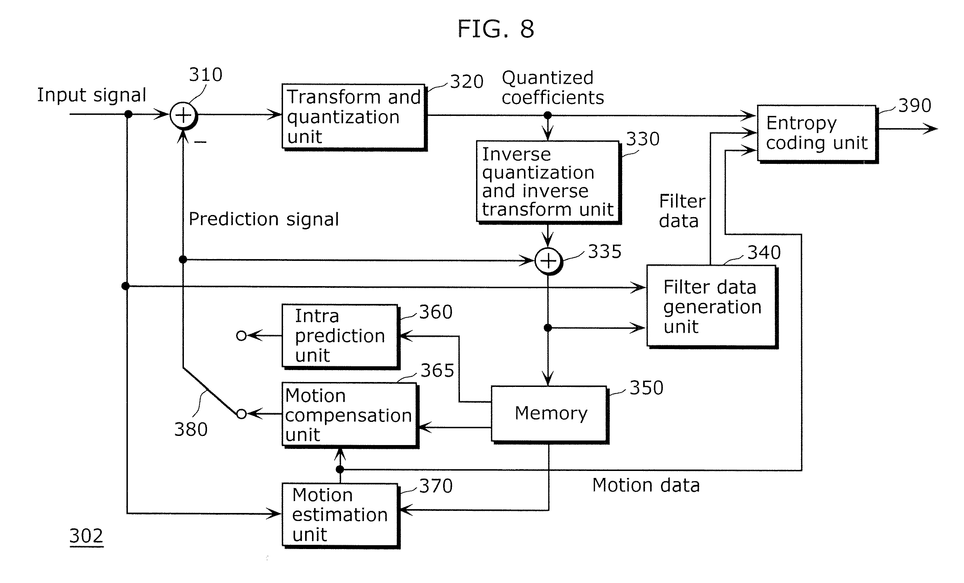

FIG. 8 is a schematic block diagram of an image coding apparatus 302 according to the present invention.

The image coding apparatus 302 is an apparatus which employs a differential pulse coded modulation (DPCM) approach in order to transmit only the differences with the subsequent images, and includes an inverse quantization and inverse transform unit 330 which functions as a decoding means. In this case, it is also good to use the output from the inverse quantization and inverse transform unit 330 in order to determine filter data based on the comparison between the original image data and the decoded data.

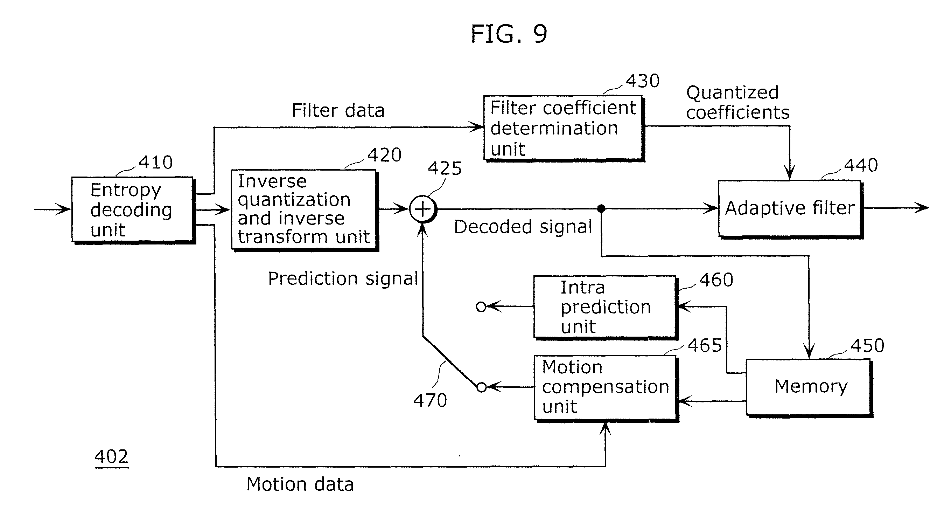

FIG. 9 is a schematic block diagram of an image decoding apparatus 402 according to the present invention.

The image decoding apparatus 402 is an image decoding apparatus in accordance with the image coding apparatus in FIG. 8. The decoded image data can be obtained by using previously decoded image data according to the prediction image decoding approach. Here, the entropy decoding unit 410 extracts the filter data from the coded image data and provides it to the filter coefficient determination unit 430. The filter coefficient determination unit 430 determines the filter coefficients based on the provided filter data and provides them to the adaptive filter 440. The adaptive filter 440 filters the decoded image data using the provided filter coefficients, and outputs the filtered image data.

As described above, in the present invention, each of the areas in a picture is assigned to a corresponding one of groups, and filter data for each group is generated. This makes it possible to perform proper filtering on a picture including areas each having a different property. More specifically, the image coding apparatus assigns each of the pixels to a corresponding one of the groups based on the spatial position of each pixel, and generates filter data for each group. This allows the image decoding apparatus to perform filtering for each group separately based on the filter data for each group.

Conventional image decoding apparatuses which cannot use original image data use only coded image data to determine adaptive filter coefficients. However, this causes a problem that the decoded image data inevitably contains noise such as quantization noise. In contrast, with the present invention, it is possible to generate filter data based on undisturbed image data. Furthermore, since the filter data is generated depending on the spatial position of each pixel, it becomes possible to perform adaptive filtering depending on the spatial position of the pixel.

This embodiment according to the present invention is described below in further detail with reference to the drawings.

(Variation of Image Coding Apparatus)

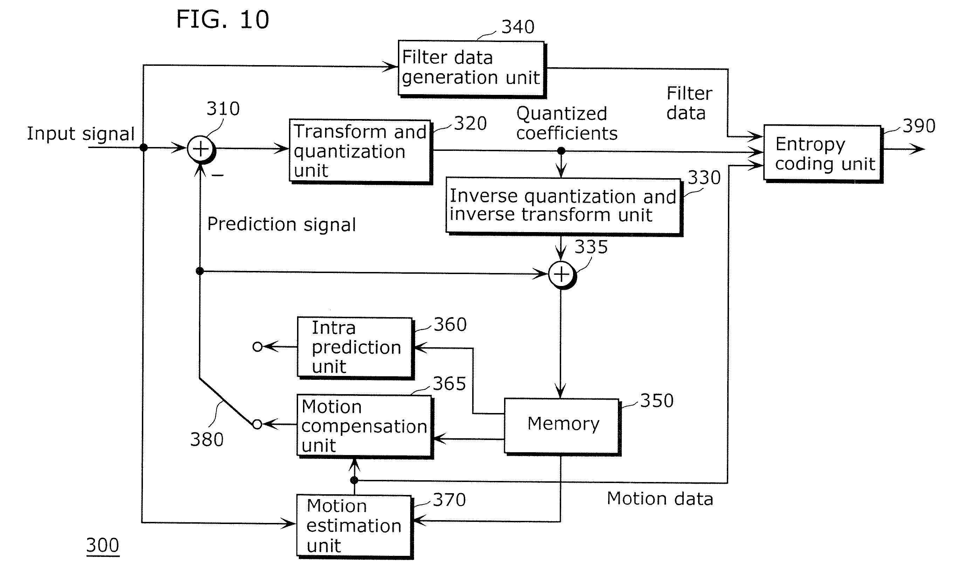

FIG. 10 is a schematic block diagram of an image coding apparatus 300 according to the present invention.

In the above descriptions, FIG. 5 has been illustrated as a schematic block diagram of the image coding apparatus 300 according to the present invention. Here, as shown in FIG. 10, it is also possible to employ a structure for extracting feature quantity from an inputted original image and generating filter data according to the feature quantity. The functions of the subtracter 310, the transform and quantization unit 320, the inverse quantization and inverse transform unit 330, the adder 335, the memory 350, the intra prediction unit 360, the motion compensation unit 365, the motion estimation unit 370, the switch 380, and the entropy coding unit 390 are the same as those in the corresponding units shown in FIG. 1, and thus detailed descriptions are omitted.

(Coded Stream)

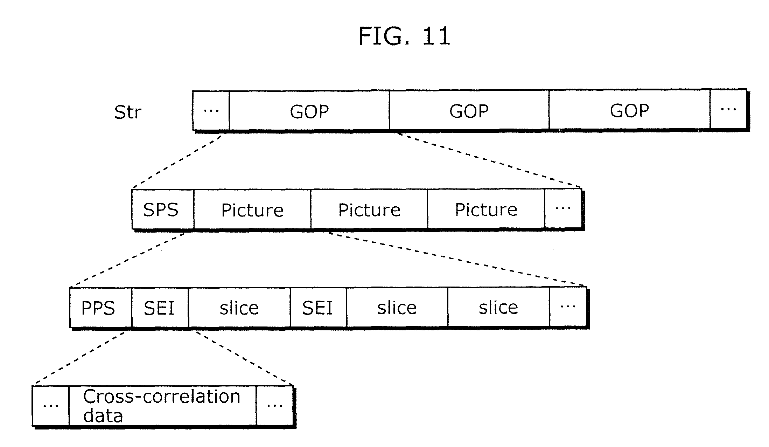

As described above, the cross-correlation data p is inserted in a SEI which is the header of a coded picture. Hereinafter, this point is described in detail with reference to FIG. 11 to FIG. 13.

FIG. 11 is a diagram showing the structure of a coded stream Str.

The coded stream Str includes plural GOPs each of which is a group of coded pictures. A GOP includes plural pictures and a sequence parameter set (SPS) composed of plural parameters to be used to decode all the pictures included in the GOP. A picture includes a picture parameter set (PPS) composed of plural parameters to be used to decode the picture, a SEI which is supplemental enhancement information, and one or more slices to be decoded using the SEI, from the top in this listed order. In addition, the picture includes one of more sets of a SEI and one or more slices. Here, for example, when a SEI is assigned to a picture, the entropy coding unit 390 inserts, in the SEI, the items of cross-correlation data p each associated with a corresponding one of the groups assigned to the respective areas in the picture. This enables use of the cross-correlation data p for each group.

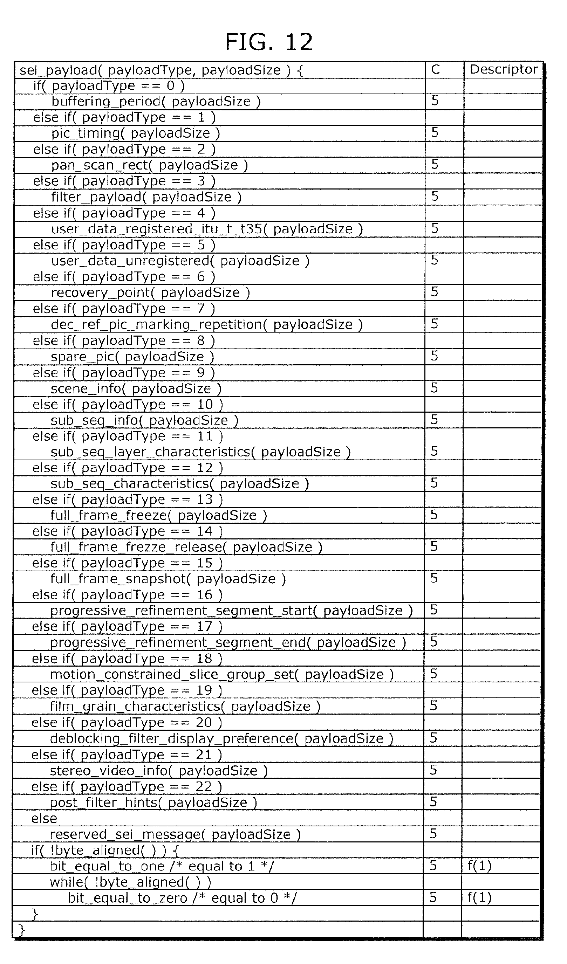

FIG. 12 is a diagram showing an exemplary SEI syntax.

Information inserted in a SEI is the information required depending on a payload type. For example, when the payload type is 22, the cross-correlation data p is inserted into an additional data field in a SEI. In other words, the cross-correlation data p is inserted in the SEI as an optional post-filter hint. This allows the image decoding apparatus according to the present invention to perform Wiener filtering by extracting the cross-correlation data p included in the SEI of the coded stream Str. In addition, even when a conventional image decoding apparatus obtains the coded stream Str according to the present invention, the conventional image decoding apparatus can skip reading of the cross-correlation data p included in the SEI of the coded stream Str, and decode the coded stream Str according to a conventional decoding method. In other words, the coded stream Str according to the present invention is compatible with a conventional coded stream Str.

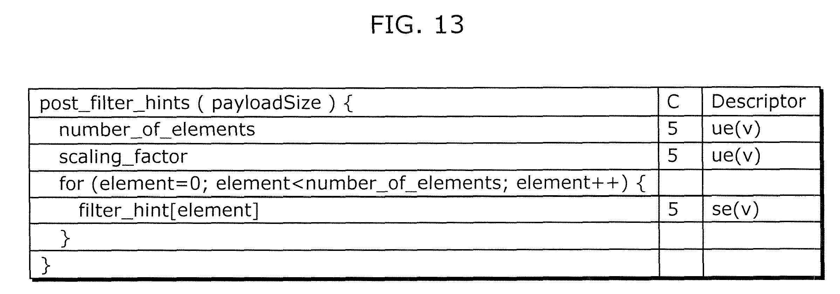

FIG. 13 is a diagram showing an example of a syntax in the cross-correlation data p.

Here, the number of elements included in a matrix p (number_of_elements), the weights on the elements (scaling_factor), and the values of the respective elements (filter_hint[element]) are inserted into the SEI as the information indicating the cross-correlation data p. In the image decoding apparatus, the values of the respective elements of the cross-correlation data p are divided by the weights shown by scaling_factor before use.

(Operations of Image Coding Apparatus)

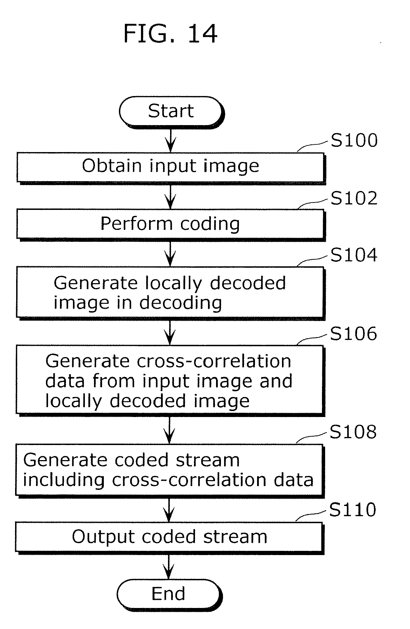

FIG. 14 is a flowchart indicating operations of the image coding apparatus 302 according to the present invention (See FIG. 8). The operations of the image coding apparatus 302 are described below with reference to FIG. 14.

First, the image coding apparatus 302 obtains an input image (Step S100), and generates quantized coefficients by coding the input image (Step S102). Next, the image coding apparatus 302 generates a locally decoded image by decoding the quantized coefficients (Step S104).

Here, the image coding apparatus 302 generates cross-correlation data p from the input image and the locally decoded image corresponding to the input image (Step S106). The cross-correlation data p is generated for each of the groups assigned to the respective areas in the picture.

Subsequently, the image coding apparatus 302 generates a coded stream Str including the cross-correlation data p by entropy coding the cross-correlation data p and the quantized coefficients (Step S108). In other words, the cross-correlation data p is inserted into the coded stream Str including the coded input image.

Lastly, the image coding apparatus 302 outputs the coded stream Str (Step S110).

The entropy coding unit 390 of the image coding apparatus 302 may insert identification information indicating the image area, among the image areas in a coded picture or the like, to which filter should be applied, in addition to the cross-correlation data p. This allows the image decoding apparatus to perform Wiener filtering only on the image area (such as an I-picture, a P-picture, and a B-picture) indicated by the identification information.

(Operations of Image Decoding Apparatus)

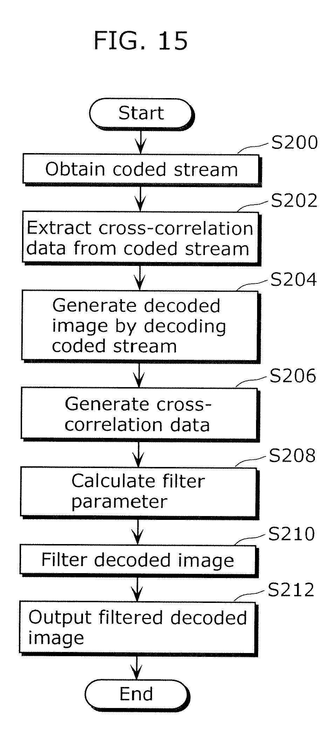

FIG. 15 is a flowchart indicating operations of the image decoding apparatus 402 according to the present invention (See FIG. 9). The operations of the image decoding apparatus 402 are described below with reference to FIG. 15.

First, the image decoding apparatus 402 obtains the coded stream Str (Step S200), entropy decodes the coded stream Str, and extracts the cross-correlation data p from the entropy decoded stream Str (Step S202).

Next, the image decoding apparatus 402 generates a decoded image by decoding the entropy decoded stream Str (Step S204). More specifically, the image decoding apparatus 402 generates the decoded image by performing inverse quantization and inverse transform on the quantized coefficients included in the coded stream Str and adding a prediction image thereto.

Next, the image decoding apparatus 402 generates auto-correlation data R based on the decoded image (Step S206), and calculates a filter parameter w of the Wiener filter according to the cross-correlation data p extracted in the Step S202 and the auto-correlation data R (Step S208). Subsequently, the image decoding apparatus 402 filters the decoded image using the calculated filter parameter w (Step S210), and outputs the filtered decoded image (Step S212).

**Industrial Applicability**

The image coding apparatus and the image decoding apparatus according to the present invention provide an advantageous effect of enhancing the image quality of decoded image data, and can be applied to digital video cameras, mobile phones handling video, personal computers and the like.

**Claims**

1. An image coding method for coding an input image, comprising:

   coding the input image to generate a coded image;
   assigning each of areas in a picture included in the input image to a corresponding one of groups, and generating filter data for each of the groups; and
   outputting a coded stream including the coded image generated in said coding and the filter data generated in said generating.

2. The image coding method according to Claim 1, further comprising

   decoding the coded image generated in said coding to generate a decoded image,
   wherein, in said generating, the filter data is generated based on the input image and the decoded image corresponding to the input image.

3. The image coding method according to Claim 1, further comprising

decoding the coded image generated in said coding to generate a decoded image,
wherein, in said generating, the filter data is generated as cross-correlation data indicating a correlation between the input image and the decoded image corresponding to the input image.

4. The image coding method according to Claim 1,
wherein, in said assigning, each of the areas in the picture is assigned to the corresponding one of the groups so that filtering is performed based on a unit different from a unit of coding.

5. The image coding method according to Claim 1,
wherein, in said assigning, pixels each having a same property is assigned to a corresponding one of the groups based on positions of the pixels in the picture.

6. The image coding method according to Claim 5,
wherein, in said assigning, the pixels is assigned to the corresponding one of the groups according to the positions of the pixels in a block which is a unit of coding.

7. The image coding method according to Claim 6,
wherein said assigning is performed so that stronger filtering is performed on pixels located closer to boundaries of a block which is a unit of coding.

8. The image coding method according to Claim 5,
wherein, in said assigning, macroblocks each having a same property is assigned to a corresponding one of the groups based on positions of the macroblocks in the picture.

9. The image coding method according to Claim 8,
wherein said assigning is performed so that a stronger filtering is performed on macroblocks each having a finer image pattern.

10. The image coding method according to Claim 1,
wherein, in said assigning, each of the areas in the picture is assigned to the corresponding one of the groups based on a predetermined assignment rule.

11. The image coding method according to Claim 1,
wherein, in said assigning, each of the areas in the picture is assigned to the corresponding one of the groups based on an adaptive assignment rule.

12. The image coding method according to Claim 1,
wherein, in said outputting, information which indicates an assignment rule and is included in the coded stream is outputted.

13. The image coding method according to Claim 1,
wherein, in said outputting, the filter data is inserted in a supplemental enhancement information area included in the coded stream.

14. An image decoding apparatus which decodes a coded image, comprising:

a decoding unit configured to decode the coded image included in a coded stream to generate a decoded image;
a filter data extraction unit configured to extract, from the coded stream, filter data for each of the groups assigned to areas in a picture; and
a filtering unit configured to perform filtering on the decoded image generated by said decoding unit, based on the filter data extracted by said filter data extraction unit.

15. The image decoding apparatus according to Claim 14, further comprising
a filter coefficient determination unit configured to determine filter coefficients based on the filter data extracted by said filter data extraction unit,
wherein said filtering unit is configured to perform filtering on the decoded image generated by said decoding unit, based on the filter coefficients determined by said filter coefficient determination unit.

**16.** The image decoding apparatus according to Claim 14,
wherein said filter data extraction unit is configured to extract, as the filter data, cross-correlation data indicating a cross-correlation between the decoded image and an uncoded image corresponding to the decoded image, and said filter coefficient determination unit is configured to calculate auto-correlation data indicating a correlation within the decoded image, and determine the filter coefficients based on the auto-correlation data and the cross-correlation data.

**17.** The image decoding apparatus according to Claim 14,
wherein said filtering unit is configured to perform filtering on pixels each having a same property using same filter data, based on positions of the respective pixels in the picture.

**18.** The image decoding apparatus according to Claim 17,
wherein said filtering unit is configured to perform filtering according to positions of the pixels in a block which is a unit of coding.

**19.** The image decoding apparatus according to Claim 18,
wherein said filtering unit is configured to perform filtering so that a stronger filtering is performed on pixels located closer to a boundary of a block which is a unit of coding.

**20.** The image decoding apparatus according to Claim 17,
wherein said filtering unit is configured to perform filtering on macroblocks each having a same property using same filter data, based on positions of the respective macroblocks in the picture.

**21.** The image decoding apparatus according to Claim 20,
wherein said filtering unit is configured to perform filtering so that a stronger filtering is performed on macroblocks each having a finer image pattern.

**22.** The image decoding apparatus according to Claim 14,
wherein said filtering unit is configured to perform filtering on the decoded image generated by said decoding unit according to a predetermined assignment rule.

**23.** The image decoding apparatus according to Claim 14,
wherein said filtering unit is configured to perform filtering on the decoded image generated by said decoding unit according to an adaptive assignment rule.

**24.** The image decoding apparatus according to Claim 14,
wherein said filter data extraction unit is configured to extract information indicating an assignment rule from the coded stream.

**25.** The image decoding apparatus according to Claim 14,
wherein said filter data extraction unit is configured to extract the filter data from supplemental enhancement information included in the coded stream.

**26.** An image coding apparatus which codes an input image, comprising:

a coding unit configured to code the input image to generate a coded image;
a filter data generating unit configured to assign each of areas in a picture included in the input image to a corresponding one of groups, and generate filter data for each of the groups; and
an output unit configured to output a coded stream including the coded image generated by said coding unit and the filter data generated by said filter data generating unit.

**27.** An image decoding method for decoding a coded image, comprising:

decoding the coded image included in a coded stream to generate a decoded image;
extracting, from the coded stream, filter data for each of the groups assigned to areas in a picture; and
performing filtering on the decoded image generated in said decoding, based on the filter data extracted in said extracting.

**28.** An image coding program for coding an input image, said program causing a computer to execute:

coding the input image to generate a coded image;
assigning each of areas in a picture included in the input image to a corresponding one of groups, and generating filter data for each of the groups; and
outputting a coded stream including the coded image generated in the coding and the filter data generated in the generating.

**29.** An image decoding program for decoding a coded image, said program causing a computer to execute:

decoding the coded image included in a coded stream to generate a decoded image;
extracting, from the coded stream, filter data for each of the groups assigned to areas in a picture; and
performing filtering on the decoded image generated in the decoding, based on the filter data extracted in the extracting.

**30.** An integrated circuit which codes an input image, comprising:

a coding unit configured to code the input image to generate a coded image;
a filter data generating unit configured to assign each of areas in a picture included in the input image to a corresponding one of groups, and generate filter data for each of the groups; and
an output unit configured to output a coded stream including the coded image generated by said coding unit and the filter data generated by said filter data generating unit.

**31.** An integrated circuit which decodes a coded image, comprising:

a decoding unit configured to decode the coded image included in a coded stream to generate a decoded image;
a filter data extraction unit configured to extract, from the coded stream, filter data for each of the groups assigned to areas in a picture; and
a filtering unit configured to perform filtering on the decoded image generated by said decoding unit, based on the filter data extracted by said filter data extraction unit.

FIG. 1

EP 2 104 355 A1

EP 2 104 355 A1

# FIG. 2

Entropy decoding unit — 210

Inverse quantization and inverse transform unit — 220

230

Deblocking filter — 240

Decoded signal

Prediction signal

Intra prediction unit — 260

270

Motion compensation unit — 265

Memory — 250

Motion data

200

FIG. 3

FIG. 4

(A)

(B)

MB

MB

EP 2 104 355 A1

G1

G2

G3

| 3 | 3 | 3 | 3 | 2 | 2 | 2 | 2 | 1 | 1 | 2 | 2 | 2 | 2 | 3 | 3 |
| 3 | 3 | 3 | 2 | 2 | 1 | 1 | 1 | 1 | 1 | 1 | 1 | 1 | 2 | 2 | 3 |
| 3 | 3 | 2 | 2 | 1 | 2 | 2 | 2 | 2 | 2 | 2 | 2 | 1 | 1 | 2 | 2 |
| 3 | 2 | 2 | 1 | 2 | 2 | 3 | 3 | 3 | 3 | 3 | 3 | 2 | 1 | 1 | 2 |
| 3 | 2 | 1 | 2 | 3 | 3 | 3 | 3 | 3 | 3 | 3 | 3 | 2 | 2 | 1 | 2 |
| 3 | 2 | 1 | 2 | 3 | 3 | 3 | 3 | 3 | 3 | 3 | 3 | 3 | 2 | 1 | 1 |
| 3 | 2 | 1 | 2 | 3 | 3 | 3 | 3 | 3 | 3 | 3 | 3 | 3 | 2 | 2 | 1 |
| 3 | 2 | 1 | 2 | 3 | 3 | 3 | 3 | 3 | 3 | 3 | 3 | 3 | 3 | 2 | 1 |
| 3 | 2 | 1 | 2 | 3 | 3 | 3 | 3 | 3 | 3 | 3 | 3 | 3 | 3 | 2 | 1 |
| 3 | 2 | 1 | 2 | 3 | 3 | 3 | 3 | 3 | 3 | 3 | 3 | 3 | 2 | 2 | 1 |
| 3 | 2 | 1 | 2 | 2 | 3 | 3 | 3 | 3 | 3 | 3 | 3 | 2 | 1 | 2 | |
| 3 | 2 | 2 | 1 | 2 | 3 | 3 | 3 | 3 | 3 | 3 | 2 | 2 | 1 | 2 | |
| 3 | 3 | 2 | 1 | 2 | 2 | 2 | 3 | 3 | 3 | 2 | 2 | 2 | 1 | 2 | 3 |
| 3 | 3 | 3 | 2 | 1 | 1 | 2 | 2 | 2 | 2 | 1 | 1 | 2 | 3 | 3 | |
| 3 | 3 | 3 | 3 | 2 | 2 | 1 | 1 | 1 | 1 | 2 | 2 | 2 | 3 | 3 | |
| 3 | 3 | 3 | 3 | 3 | 2 | 2 | 2 | 2 | 2 | 2 | 2 | 3 | 3 | 3 | 3 |

21

# FIG. 5

Input signal → Transform and quantization unit `320` → Quantized coefficients → Entropy coding unit `390` →

Input signal → Filter data generation unit `340` → Filter data → Entropy coding unit

300

EP 2 104 355 A1

## FIG. 6

# FIG. 7

400

FIG. 8

Input signal

310

320 Transform and quantization unit

Quantized coefficients

330 Inverse quantization and inverse transform unit

335

Prediction signal

Entropy coding unit 390

Filter data

340 Filter data generation unit

350 Memory

360 Intra prediction unit

365 Motion compensation unit

370 Motion estimation unit

380

Motion data

302

FIG. 9

FIG. 10

EP 2 104 355 A1

EP 2 104 355 A1

## FIG. 11

## FIG. 12

| sei_payload( payloadType, payloadSize ) { | C | Descriptor |
|---|---|---|
| if( payloadType == 0 ) | | |
|     buffering_period( payloadSize ) | 5 | |
| else if( payloadType == 1 ) | | |
|     pic_timing( payloadSize ) | 5 | |
| else if( payloadType == 2 ) | | |
|     pan_scan_rect( payloadSize ) | 5 | |
| else if( payloadType == 3 ) | | |
|     filter_payload( payloadSize ) | 5 | |
| else if( payloadType == 4 ) | | |
|     user_data_registered_itu_t_t35( payloadSize ) | 5 | |
| else if( payloadType == 5 ) | | |
|     user_data_unregistered( payloadSize ) | 5 | |
| else if( payloadType == 6 ) | | |
|     recovery_point( payloadSize ) | 5 | |
| else if( payloadType == 7 ) | | |
|     dec_ref_pic_marking_repetition( payloadSize ) | 5 | |
| else if( payloadType == 8 ) | | |
|     spare_pic( payloadSize ) | 5 | |
| else if( payloadType == 9 ) | | |
|     scene_info( payloadSize ) | 5 | |
| else if( payloadType == 10 ) | | |
|     sub_seq_info( payloadSize ) | 5 | |
| else if( payloadType == 11 ) | | |
|     sub_seq_layer_characteristics( payloadSize ) | 5 | |
| else if( payloadType == 12 ) | | |
|     sub_seq_characteristics( payloadSize ) | 5 | |
| else if( payloadType == 13 ) | | |
|     full_frame_freeze( payloadSize ) | 5 | |
| else if( payloadType == 14 ) | | |
|     full_frame_frezze_release( payloadSize ) | 5 | |
| else if( payloadType == 15 ) | | |
|     full_frame_snapshot( payloadSize ) | 5 | |
| else if( payloadType == 16 ) | | |
|     progressive_refinement_segment_start( payloadSize ) | 5 | |
| else if( payloadType == 17 ) | | |
|     progressive_refinement_segment_end( payloadSize ) | 5 | |
| else if( payloadType == 18 ) | | |
|     motion_constrained_slice_group_set( payloadSize ) | 5 | |
| else if( payloadType == 19 ) | | |
|     film_grain_characteristics( payloadSize ) | 5 | |
| else if( payloadType == 20 ) | | |
|     deblocking_filter_display_preference( payloadSize ) | 5 | |
| else if( payloadType == 21 ) | | |
|     stereo_video_info( payloadSize ) | 5 | |
| else if( payloadType == 22 ) | | |
|     post_filter_hints( payloadSize ) | 5 | |
| else | | |
|     reserved_sei_message( payloadSize ) | 5 | |
| if( !byte_aligned( ) ) { | | |
|     bit_equal_to_one /* equal to 1 */ | 5 | f(1) |
|     while( !byte_aligned( ) ) | | |
|       bit_equal_to_zero /* equal to 0 */ | 5 | f(1) |
|   } | | |
| } | | |

## FIG. 13

| post_filter_hints ( payloadSize ) { | C | Descriptor |
|---|---|---|
| number_of_elements | 5 | ue(v) |
| scaling_factor | 5 | ue(v) |
| for (element=0; element<number_of_elements; element++) { | | |
| filter_hint[element] | 5 | se(v) |
| } | | |
| } | | |

EP 2 104 355 A1

# FIG. 14

```
        ( Start )
            │
            ▼           ┌─ S100
┌─────────────────────────┐
│   Obtain input image     │
└─────────────────────────┘
            │
            ▼           ┌─ S102
┌─────────────────────────┐
│     Perform coding       │
└─────────────────────────┘
            │
            ▼           ┌─ S104
┌─────────────────────────┐
│  Generate locally decoded │
│  image in decoding        │
└─────────────────────────┘
            │
            ▼           ┌─ S106
┌─────────────────────────┐
│  Generate cross-correlation│
│  data from input image and │
│  locally decoded image     │
└─────────────────────────┘
            │
            ▼           ┌─ S108
┌─────────────────────────┐
│  Generate coded stream    │
│  including cross-correlation data │
└─────────────────────────┘
            │
            ▼           ┌─ S110
┌─────────────────────────┐
│    Output coded stream    │
└─────────────────────────┘
            │
            ▼
         ( End )
```

# FIG. 15

```
            ( Start )
                │
                ▼                    S200
    ┌───────────────────────┐
    │  Obtain coded stream  │
    └───────────────────────┘
                │
                ▼                    S202
    ┌───────────────────────┐
    │ Extract cross-correlation
    │ data from coded stream │
    └───────────────────────┘
                │
                ▼                    S204
    ┌───────────────────────┐
    │   Generate decoded    │
    │   image by decoding   │
    │   coded stream        │
    └───────────────────────┘
                │
                ▼                    S206
    ┌───────────────────────┐
    │    Generate cross-    │
    │    correlation data   │
    └───────────────────────┘
                │
                ▼                    S208
    ┌───────────────────────┐
    │    Calculate filter   │
    │      parameter        │
    └───────────────────────┘
                │
                ▼                    S210
    ┌───────────────────────┐
    │  Filter decoded image │
    └───────────────────────┘
                │
                ▼                    S212
    ┌───────────────────────┐
    │ Output filtered decoded│
    │ image                 │
    └───────────────────────┘
                │
                ▼
             ( End )
```

**INTERNATIONAL SEARCH REPORT**

| | International application No. |
|---|---|
| | PCT/JP2007/075304 |

A. CLASSIFICATION OF SUBJECT MATTER
*H04N7/26(2006.01)i*

According to International Patent Classification (IPC) or to both national classification and IPC

B. FIELDS SEARCHED

Minimum documentation searched (classification system followed by classification symbols)
H04N7/26

Documentation searched other than minimum documentation to the extent that such documents are included in the fields searched
Jitsuyo Shinan Koho        1922-1996   Jitsuyo Shinan Toroku Koho  1996-2008
Kokai Jitsuyo Shinan Koho  1971-2008   Toroku Jitsuyo Shinan Koho  1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-211152 A (National University Corporation Hokkaido University), 10 August, 2006 (10.08.06), Full text; all drawings (Family: none) | 1-31 |
| Y | JP 2006-148878 A (Mitsubishi Electric Research Laboratories, Inc.), 08 June, 2006 (08.06.06), Par. Nos. [0032], [0033], [0061] to [0069]; Figs. 5, 9 & US 2005/0100236 A1 | 1-31 |
| Y | JP 10-150663 A (Sony Electronics, Inc.), 02 June, 1998 (02.06.98), Full text; all drawings & US 5796875 A | 3,16 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 January, 2008 (31.01.08) | 12 February, 2008 (12.02.08) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

International application No.

PCT/JP2007/075304

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 6-38188 A  (Canon Inc.),<br>10 February, 1994 (10.02.94),<br>Full text; all drawings<br>& US 5537150 A | 4,6,7,10-12,<br>18,19,22-24 |
| Y | JP 2004-336103 A  (Texas Instruments Japan Ltd.),<br>25 November, 2004 (25.11.04),<br>Full text; all drawings<br>& US 2004/0228538 A1 | 4-12,17-24 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050105627 A